# EUROPEAN PATENT APPLICATION

(11) **EP 4 819 280 A1**
(43) Date of publication of application: **07.10.2026**
(21) Application number: 25305483.7
(22) Date of filing: 01.04.2025
(51) Int. Cl.: H01M 10/0562

(54) **POLYCRYSTALLINE SOLID ELECTROLYTE**

(71) Applicant: Saint-Gobain Ceramics & Plastics Inc., Worcester, Massachusetts 01615 (US)
(72) Inventor: MARCHANDIER, Thomas, 93300 Aubervilliers (FR); DANET, Rémi, 93300 Aubervilliers (FR); OUSPENSKI, Vladimir, 93300 Aubervilliers (FR); ASSAT, Gaurav, 92400 Courbevoie (FR)
(74) Representative: Saint-Gobain Recherche

(57) **Abstract**

The present invention relates to a composite material comprising a polycrystalline solid electrolyte material of the formula (I) M_{3-z}(Me^{k+})_{f}X_{3-z+k*f} and mineral fibers, said composite having at least one of its dimensions that is lower or equal to 150 µm, and at least another dimension that is greater than or equal to 1 mm. The preparation process comprises the steps of: disposing a compound of formula (I) or an ammonium complex thereof on a substantially planar surface, heating the compound of formula (I) or the ammonium complex thereof at a temperature ranging from 290 °C to 600 °C, and concomitantly or sequentially to the heating step, applying to the compound of formula (I) a pressure that is orthogonal to the substantially planar surface, said pressure ranging from 1.5 MPa to 30 MPa. The invention further concerns an electrolyte tape comprising said composite material.

## Description

### Technical field

The present invention belongs to the field of All-Solid-State rechargeable Batteries (ASSB) and in particular relates to their individual constituents such as a solid electrolyte, in particular in the form of a thin separator film and a preparation process thereof.

### Technical background

ASSBs are of particular interest as a substitute to traditional Li-Ion batteries, especially since they raise fewer safety concerns and demonstrating higher energy capacities.

To obtain an ASSB, a solid electrolyte is used instead of the liquid electrolytes found in Li-Ion batteries. The perspective ASSBs also use Li-metal anodes and high energy NMC cathode particles, said particles being incorporated into the solid state electrolyte. The choice of Li-metal anode and high electric potential NMC cathode particles is indispensable in view of obtaining the maximum energy capacity of a rechargeable battery.

Such solid electrolyte is for example chosen from lithium thiophosphate (β-Li₃PS₄, LPS), argyrodite (Li₆PS₅Cl) such as described in H.J. Deiseroth, et al. "Li6PS5X: a class of crystalline Li-rich solids with an unusually high Li+ mobility." Angew. Chem. Int. Ed., 47 (2008), pp. 755-758. Also halide solid electolytes , for example Li₃InCl₆, such as described in X. Li et al. "Air-stable Li3InCl6 electrolyte with high voltage compatibility for all-solid-state batteries." Energy Environ. Sci., 2019,12, pp. 2665-267; Schmidt, M. O. et al. "Zur Kristallstruktur von Li3InCl6." Zeitschrift für Anorg. und Allg. Chemie 1999, 625 (4), 539-540; and G.Meyer, et al. "Handbook on the Physics & Chemistry of Rare Earths", V.28, chapter 177, 2000 Elsevier Sci.

However, the main drawbacks of these compounds are their chemical and electro-chemical interactions with electrode materials or bad adhesion properties with cathode particles forcing to apply strong external pressure on battery stack in the case of sulfide-based electrolyte. The objectives of safety in operations, easy recyclability and competitive cost are also putting halide electrolytes in the shortlist of perspective candidates for industrial use in ASSB application.

Halide solid electrolytes are of particular interest since they display a combination of attractive properties including good ionic conductivity (above 2 mS.cm⁻¹), high electro-chemical stability against oxidation at cathode side, good adhesion property with oxide cathode particles (NMC) and a better compactibility (deformability) than other solid-state inorganic electrolytes.

Known processes to obtain a halide solid electrolyte include mixing oxide and/orcarbonate compounds in acid together with ammonium halide. The obtained mixture is then dried to obtain halide compounds complexed with ammonium in the form of coarse dry powder (containing about 1 %wt. of residual moisture). Said powder is then heated to temperatures, for example above 400 °C to generate a reaction between the halides compounds complexed with ammonium, resulting in the sublimation of volatile ammonium halide and obtain a halide solid electrolyte which may then be reduced to a powder form by grinding.

The powder may then be pressed into a desired shape, for example into a disk of a size defined by its application, with a thicknessvarying from 10 micrometers up to few hundreds of micrometers and a diameter from 5 mm up to a few hundreds millimeters, to then be inserted as an electrolyte separator into a battery cell.

Alternatively, the powder may be placed into a crucible to initiate crystal growth by Vertical Bridgman or by a Heat Exchange method in order to obtain a single-crystalline or polycrystalline bulk from which a thin slice can be machined out. This alternative has the advantage of resulting in a product that has no porosity, which increases the effective transmission surface. Another advantage of this kind of product is that it does not require the formation of a composite product, for example with an organic binder such as a polymer binder. A further advantage of this method is that in the case of an obtained product that is single-crystalline, it does not have any grain boundaries, which lessen the ionic conductivity, but rather, in the case of a polycrystalline product, boundaries between crystallites. The latter have a much less important impact on the ionic conductivity of the product.

However, this "crystal growth route" is not adapted for industrial production of solid-state electrolytes separators as it is costly and a non-continuous process, while known industrial process usually involves a so-called "roll-to-roll" (R2R) calendering process wherein the layers constituting a cell are coated and/or deposited onto a thin film that then goes through compacting, thinning and consolidation calender rolls.

Such a continuous process makes the powder described above more suited to industrial application than grown crystals of electrolyte material. Strategies have been developed to be able to obtain self-standing thin films with controlled dimensions from such a powder, such as using an organic binder and/or using a heated press to form a solid block. However, as noted above, a product obtained from a powder displays considerable drawbacks in comparison to a crystalline product demonstrating better ionic conductivity.

### Summary of the invention

### Technical problem

The invention thus offers to solve the technical problem of providing a composite material comprising a polycrystalline solid electrolyte material that is readily implemented into an industrial process, in particular a continuous process such as a roll-to-roll industrially scalable process.

The product of the invention is of particular interest because it may be formed on-line as a self-standing halide solid electrolyte, in particular in the form of an electrolyte tape, by the thermal treatment of non-hygroscopic precursor material.

The invention therefore also consists of a process that is easily scalable in order to obtain halide solid electrolyte continuous manufacturing as required for the solid-state battery industry.

### Solution to the technical problem

The inventors surprisingly obtained, in particular from non-hygroscopic precursors, a consolidated thin film of halide solid electrolyte (HSE), in particular that is free from any organic binder such as a polymer binder. Said HSE allows to form a free-standing film that is readily implemented, for example as a separator, in an ASSB.

Thus, according to a first aspect, the invention relates to a composite material comprising a polycrystalline solid electrolyte material of the formula

M_{3-z}(Me^{k+})_{f}X_{3-z+k*f} (I)

wherein -3≤z<3, 2≤k<6, 0<f≤1;
- M is chosen from at least one alkali metal element, in particular M is chosen from Li and any of its combination with another alkali metal element;
- Me comprises a divalent, trivalent, tetravalent, pentavalent or hexavalent metal element or any combination thereof, and
- X is chosen from at least one halogen, in particular X is chosen from Cl, Br, I and any combination thereof; and

Mineral fibers,
the composite material having at least one of its dimensions that is lower or equal to 150 µm, and having at least another dimension that is greater than or equal to 1 mm.

According to a second aspect, the present invention also concerns an electrolyte tape comprising a composite material according to the invention.

According to a third aspect, the invention further pertains to a preparation process of a composite material or an electrolyte tape according to any of the preceding claims, comprising the following steps:
- disposing a compound of formula (I) as defined herein or an ammonium complex thereof on a substantially planar surface,
- obtaining a pre-composite by disposing mineral fibers as defined herein on the compound of formula (I) or an ammonium complex thereof,
- heating the pre-composite at a temperature ranging from 290 °C to 600 °C, in particular from 300 °C to 590 °C and preferably from 320 °C to 550 °C, and
- concomitantly or sequentially to the heating step, applying to the pre-composite a pressure that is orthogonal to the substantially planar surface, said pressure ranging from 1.5 MPa to 30 MPa.

### Advantages of the invention

As demonstrated herein after, the present invention allows to obtain a self-standing composite material comprising a polycrystalline halide solid electrolyte material and mineral fibers, of controlled dimensions.

In particular, the composite material according to the invention yields ionic conductivities previously unreachable at the industrial scale, i.e. in a product that is readily implemented in an industrial process, preferably in a roll-to-roll process.

These ionic conductivities can be reached thanks to the polycrystalline nature of the solid electrolyte materialcomprised in the composite material according to the invention.

In particular, said solid electrolyte material comprises less grain boundaries than, for example a compressed powder, which results in a higher ionic conductivity.

Furthermore, the synthesis route of the solid electrolyte material allows to control its porosity, as opposed to a compressed powder, and thus, by reducing said porosity, maximizing the ionic conductivity of the material.

In particular, these high ionic conductivities are not mitigated by the presence of any organic binder, such as a polymer binder, in the composite material. The composite material of the invention, while not comprising any organic binder, still has satisfactory mechanical properties to be implemented at the industrial scale, notably because of the presence of the mineral fibers.

In particular, these high ionic conductivities allow some margin to be mitigated by the introduction of mineral fibers in order to provide mechanical consolidation, reinforcement, in particular supporting cracks free elastic behavior of a thin layer, especially useful for implementing the composite material according to the invention in industrial applications, in particular in the industrial production of battery elements (electrolyte, cathode composite...), for example in a roll-to-toll process.

### Detailed description of embodiments

### Polycrystalline solid electrolyte

The invention pertains to a composite material comprising a polycrystalline solid electrolyte of the formula:

M_{3-z}(Me^{k+})_{f}X_{3-z+k*f} (I)

wherein -3≤z<3,
k is the valence of Me with 2≤k<6, and
0<f≤1;

a. M is chosen from at least one alkali metal element, in particular M is chosen from Li and any of its combination with another alkali metal element;
b. Me comprises a divalent, trivalent, tetravalent, pentavalent or hexavalent metal element or any combination thereof, and
c. X is chosen from at least one halogen, in particular X is chosen from Cl, Br, I and any combination thereof.

In a particular embodiment, Me is chosen from:
a. alkaline earth metals, including Ba, Mg, Ca, Sr,
b. rare earth elements such as Ce, Y, Gd, Er, La, Yb, Sc and their combinations,
c. a 3d transition metal such as Zn, Cu, V, and
d. an element chosen from Zr, Hf, Ti, Sn, Th, Ge, Ta, Nb, Mo, W, Sb, Te, In, Bi, Al, Ga, B, and
e. any combination thereof.

In a particular embodiment, Me comprises more than one metal element. Then k may be the average of the total of the valence of each metal element. For example, Me includes a trivalent element, such as Y and may further include a tetravalent element in equal molar quantity. In that case, k=(3+4)/2=3.5. In particular, k may be 2, for example when Me is only Y, 3, 4 or 5.

It is understood that atomic vacancy can be present inside the unit cell of the halide solid electrolyte. In this case, atomic vacancy can be noted in the formula of the solid halide electrolyte as M_{3-z}(Me^{k+})_{f•y}X_{3-z+k*f} wherein ● represents atomic vacancy inside the unit cell and y is the number of vacant atomic positions. In a particular embodiment, y can be f*(k-1).

In a particular embodiment, M can include Li as well as Na, K, Rb, Cs, or any combination thereof. For example, M can include Li and at least one of K and Na, or a combination thereof. In still another example, M can consist of Li and at least one of Cs and Rb. In another example, M can consist of Li and of at least one of Na and Cs.

In a preferred embodiment, M consists of Li.

In a particular embodiment, Me can include an alkaline earth metal element, a rare earth element, a 3d transition metal, an element chosen from Zr, Hf, Ti, Sn, Th, Ge, Ta, Nb, Mo, W, Sb, Te, In, Bi, Al, Ga, B and any combination thereof. For example, Me can include an alkaline earth metal including Ba, Mg, Ca and Sr, or any combination thereof. In another example, Me can include a rare earth element, in particular Me can consist of at least one rare earth element. The rare earth element may be chosen from Y, Ce, Gd, Er, La, Yb, Sc and their combinations. In a further example, Me can include a 3d transition metal, in particular chosen from Zn, Cu, V and any combination thereof.

In a preferred embodiment, Me consists of Y or a combination of Y and In, k is 3 and f is 1. Preferably Me is a combination of Y and In.

In a particular embodiment, X is chosen from Cl, Br, I and any combination thereof. In an example, X can include at least one of Cl and Br. Preferably, X can consist of Cl, Br or any combination thereof.

In a particular embodiment, X represents Cl_{6-y}Br_{y} wherein 0 < y < 6, in particular 1 ≤ y ≤ 5 and preferably 1 ≤ y ≤ 3.

In a particular embodiment, the halide solid electrolyte can be represented by Li_{3-z}Me^{k+}X_{3-z+k}. When z is not 0, the complex metal halide can be non-stoichiometric. When z is 0, the complex metal halide can be stoichiometric. For example, -0.95≤z≤0.95. In another example, Me includes Y as well as Gd, Yb, In, Sc, Zn, Mg, Ca, Ba, Sn or a combination thereof, and X is Cl, Br or a combination thereof.

In a preferred embodiment, z is 0.

In a particular embodiment, the solid halide electrolyte can be represented by Li₃MeBr₆. In another particular embodiment, the solid halide electrolyte can be represented by Li₃MeCl₆. In these embodiments, Me can comprise Y and, optionally at least one of the above-mentioned metal elements, having a valence of 3. Me can comprise Y and include at least one of the above-mentioned metal elements, wherein the average valence of the at least one metal element is 3.

In another particular embodiment, the solid halide electrolyte can consist of Li, Y, and at least one of Cl and Br. For example, the solid halide electrolyte can consist of Li, Y and Cl. In another example, the solid halide electrolyte can consist of Li, Y and Br. In still another example, the solid halide electrolyte can consist of Li, Y, Cl and Br. In another particular embodiment, the solid halide electrolyte can consist of Li, In, and at least one of Cl and Br. For example, the solid halide electrolyte can consist of Li, In and Cl. In another example, the solid halide electrolyte can consist of Li, In and Br. In still another example, the solid halide electrolyte can consist of Li, In, Cl and Br. In another particular embodiment, the solid halide electrolyte can consist of Li, In, Y and at least one of Cl and Br. For example, the solid halide electrolyte can consist of Li, In, Y and Cl. In another example, the solid halide electrolyte can consist of Li, In, Y and Br. In still another example, the solid halide electrolyte can consist of Li, Y, In, Cl and Br. In a particular example, the solid halide electrolyte can be represented by Li₃₋ₓY₁₊ₓCl₆₊₂ₓ, Li₃₋ₓY₁₊ₓBr₆₊₂ₓ, Li₃₋ₓIn₁₊ₓCl₆₊₂ₓ, Li₃₋ₓIn₁₊ₓBr₆₊₂ₓ, Li₃Y₁₋ₓInₓCl₆ or Li₃Y₁₋ₓInₓBr₆, wherein 0<x≤0.5, or represented by Li₃₋ₓY₁₊ₓCl_{6+2x-y}Br_{y}, Li₃₋ₓIn₁₊ₓCl_{6+2x-y}Br_{y} or Li₃Y₁₋ₓInₓCl_{6-y}Br_{y} wherein 0<x<0.5 and 1.0<y<3.0.

The solid halide electrolyte may be chosen from Li₃YCl₆, Li₃YBr₆, Li_{2.7}Y_{0.7}Zr_{0.3}Cl₆, Li_{2.8}Y_{0.8}Sn_{0.2}Cl₆, Li_{3.2}Y_{0.8}Zn_{0.2}Cl₆, Li_{3.2}Y_{0.8}Mg_{0.2}Cl₆, Li₃Y_{1/3}Zr_{1/3}Mg_{1/3}Cl₆, Li₃Y_{1/3}Sn_{1/3}Mg_{1/3}Cl₆, Li₃Y_{1/3}Zr_{1/3}Zn_{1/3}Cl₆, Li_{2.95}Na_{0.05}YBr₆, Li_{2.95}K_{0.05}YBr₆, Li_{2.95}Cs_{0.05}YBr₆, Li₃Y_{0.7}Gd_{0.3}Br₆, Li₃Y_{0.8}Yb_{0.2}Br₆, Li₃Y_{0.9}La_{0.1}Br₆, Li₃Y_{0.9}Ce_{0.1}Br₆, Li₃In_{0.5}Y_{0.5}Cl₆, Li₃Y₁₋ₓInₓ(Cl,Br)₆ such as Li₃Y_{0.985}In_{0.015}Cl₄Br₂ or Li₃Y(Cl,Br)₆ such as Li₃YCl₄Br₂, or Li₃YCl₅Br.

A composite according to the invention could also comprise an electrolyte material that is not of the formula (I), for example a sulphide solid electrolyte such as lithium sulphide, silicon sulphide, phosphorous sulphide, boron sulphide or a combination thereof. Examples of sulphide solid electrolytes may include at least one of Li₂S-P₂S₅, Li₂S-P₂S₅-LiX (where X is as defined herein), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n each are a positive number, Z represents any of Ge, Zn, and Ga), Li₂S-GeS₂, Li₂S-SiS₂-Li₃PO₄, Li₂S-SiS₂-LiₚM'O_{q} (where p and q each are a positive number, M' represents at least one of P, Si, Ge, B, Al, Ga, or In). Sulphide solid electrolytes also include argyrodites of the general formula Li₇₋ₓPS₆₋ₓXₓ (where 0≤x≤2 and X is as defined herein), especially of formula Li₆PS₅Cl. Sulphide solid electrolyte also include thiophosphates such as a thio-LISICON, for example chosen from (Li)₄₋ₓGe₁₋ₓPₓS₄, wherein x ranges from 0 to 1, Li₇P₂S₈I and Li₂S-P₂S₅. For example, a sulphide solid electrolyte may include Li₂S and P₂S₅ in a molar ratio that may range from 50:50 to 90:10.

The composite material according to the invention has at least one of its dimensions that is lower or equal to 150 µm, and has at least another dimension that is greater than or equal to 1 mm. A material of such dimensions is for example a tape, i.e. having a relatively small thickness (lower or equal to 150 µm) and a relatively long length (greater than or equal to 1 mm).

As a result, in the present invention, when the at least one dimension of the material is mentioned, it preferentially refers to its thickness. Similarly, when the at least another dimension of the composite material according to the invention is mentioned, it preferentially refers to its length.

In a particular embodiment, the composite material according to the invention has at least one dimension that is lower or equal to 100 µm, in particular lower or equal to 50 µm and preferably lower or equal to 20 µm.

In other words, the composite material according to the invention may be obtained in the form of a film, that has a thickness that is lower or equal to 150 µm, said thickness may be lower or equal to 100 µm, in particular lower or equal to 50 µm, and preferably lower or equal to 20 µm.

Preferably, the thickness of the composite material according to the invention may range from 10 µm to 20 µm.

Such a thickness as the one recited above may be obtained during a process according to the invention by applying an orthogonal pressure to the heated compound of formula (I) as described below. This pressure was not found to adversely impact the properties of the material according to the invention.

To the knowledge of the inventors, composite materials comprising polycrystalline halide solid electrolyte films having such a thickness have not been previously described as they could only be obtained through a process according to the invention.

In a particular embodiment, the composite material according to the invention has at least another dimension that is greater than or equal to 1 cm and preferably greater than or equal to 10 cm.

In other words, the composite material according to the invention may be obtained in the form of a film, that has a length that is greater than or equal to 1 mm, in particular said length may be greater than or equal to 1 cm and preferably greater than or equal to 10 cm.

Such a length is representative of a material obtained from a continuous process.

### Electrolyte tape

The present invention further pertains to an electrolyte tape comprising a composite material according to the invention.

Such a tape is of significant interest in the battery industry as it is readily implemented into an all-solid-state-battery (ASSB).

The present invention allows to produce by a continuous method, which is particularly advantageous, at the industrial scale a tape according to the invention, comprising a polycrystalline material, in particular through a continuous process such as a roll-to-roll process.

In a preferred embodiment, the tape is constituted of the composite material according to the invention, said composite material being constituted of the polycrystalline solid electrolyte and the mineral fibers described herein.

By contrast with the products and processes known from the prior art, the present invention does not require the addition of an organic binder, for example a polymer binder, to obtain a tape that is suitable for industrial processing and implementation in an ASSB.

In particular, the presence of mineral fibers in a composite according to the invention provides a composite with the desired mechanical properties to be handled at the industrial scale, for example to be stored or implemented in a roll-to-roll process.

### Mineral fibers

The composite according to the invention comprises mineral fibers.

In a particular embodiment, the mineral fibers are chosen from silica fibers, glass fibers, quartz fibers, carbon fibers, basalt fibers, and mixtures thereof, in particular the mineral fibers are chosen from quartz fibers, glass fibers and mixtures thereof and preferably the mineral fibers are quartz fibers.

In particular the surface of the fibers can be pretreated by a coating to improve the adhesion and ionic conductivity properties of the surface of the fibers in contact with the polycrystalline solid electrolyte material

The mineral fibers may in particular be based on silica, that is to say contain more than 50 % by weight of SiO₂ as in the case of glass (E, D, S 2, R, low K, low Dk) or silica fiber (comprising more than 90% by weight of SiO₂), or of quartz fiber (comprising more than 95% by weight of SiO₂), especially the quartz fibers sold under the Quartzel brand by Saint-Gobain Quartz SAS.

In a particular embodiment, the composite according to the invention comprise from 0.1 % to 30 % by weight, in particular from 0.5 % to 20 % by weight and preferably from 1 % to 10 % by weight, compared to the total weight of the composite, of mineral fibers.

A composite with less than 0.1 %, in particular less than 0.5 % and even more so with less than 1 % by weight, compared to the total weight of the composite, of mineral fibers would not possess satisfactory mechanical properties for an industrial implementation as described herein.

A composite with more than 30 %, in particular more than 20 % and even more so with more than 10 % by weight, compared to the total weight of the composite, of mineral fibers would not possess satisfactory ionic conductivity.

### Preparation process

The present invention further relates to a preparation process of a composite material or of an electrolyte tape according to the invention.

A process according to the invention may readily be applied either starting from a compound of formula (I) or from an ammonium complex (also called herein "precursor") thereof.

In a preferred embodiment, when the process according to the invention is carried out on precursors of a compound of formula (I), it further includes steps of providing said precursors.

In this embodiment, a process according to the invention further includes the preliminary steps of:
- providing compounds of formulae M₂CO₃ and Me₂O₃ in a solution of HX and NH₄X, wherein M, Me and X are as defined herein,
- drying the solution to obtain an ammonium complex of a compound of formula (I),
- disposing the said ammonium complex on a substantially planar surface, and
- initiating a heating step as defined below to form the compound of formula (I).

In a process according to the invention, the compound of formula (I) or ammonium complex thereof is placed on a substantially planar surface.

In a preferred embodiment, the substantially planar surface is made of a material selected from the group comprising carbon-containing material such as graphite, preferably with pyrolytic coating, graphene, glassy carbon; quartz; sapphire; silicon and garnet compounds, in particular the substantially planar surface is made of graphene.

These surfaces are advantageous in that they do not adhere to the material according to the invention which is thus easily recovered.

Said substantially planar surface may be a substrate or a coating.

In a preferred embodiment, the substantially planar surface is an element of an all-solid-state battery. Said element may be an electrode (anode, cathode), an electrolyte layer, or any intermediate layer or coating separating them.

A process according to the invention comprises a heating step wherein the compound of formula (I) as described herein, or an ammonium complex thereof, is heated at a temperature ranging from 290 °C to 600 °C, in particular from 300 °C to 590 °C and preferably from 320 °C to 550 °C.

During the heating step, when it is undergone by an ammonium complex of a compound of formula (I), the first physical phenomenon to occur may be the decomposition and elimination of ammonium halide and any other agent through vaporization/sublimation, to obtain the compound of formula (I).

Once a compound of formula (I) undergoes the heating step, it melts and then crystallizes upon cooling to form a thin halide film.

For industrial implementation of a process according to the invention, this step may be carried locally, for example on a conveyor belt, in a manner similar to zone melting technique for crystal growth. That is to say that the heating step may require selective heating.

In a preferred embodiment, heating the compound of formula (I) or an ammonium complex thereof is selectively performed with laser heating, infrared heating, resistive heating, microwave heating or inductive heating.

Concomitantly or sequentially to the heating step, a process according to the invention comprises a step of applying to the compound of formula (I) a pressure that is orthogonal to the substantially planar surface, said pressure ranging from 1.5 MPa to 30 MPa.

Applying such a pressure allows, thanks to the plastic deformation properties of the halide solid electrolytes of formula (I), to reach the required thickness for a composite material according to the invention.

The inventors observed that applying such a pressure did not adversely affect the properties of the composite material according to the invention.

### Examples

Samples were prepared with Li₃YBr₆ fine particles (1-3 µm in diameter) suspension in toluene that was spread on a quartz flat surface.

A felt of quartz fibers having a 10 g/m² weight, sold by the company Saint-Gobain Quartz under the reference Quartzel with an epoxy binder was separated (burning out under air atmosphere) from its binder by spending 6 hours at 600 °C. The individual fibers diameters vary from 6 to 14 µm and their length from 0.5 mm to 20 mm. The obtained binderless felt was then laid on the sample and covered by the flat surface of a quartz glass block, exerting a pressure of about 1 kPa .

The obtained samples were then heated in an oven under nitrogen flow according to the following steps:
a. at 50 °C for 3 hours,
b. at 150 °C for 3 hours, and
c. at 590 °C for 6 hours
   before being allowed to cool down at ambient temperature (20 °C), the cooling down taking approximately 1 hour.

5 cm by 5 cm crystallized thin films were obtained. The films comprised the quartz fibers and had a translucent water-colour and homogeneous aspect (i.e. displayed minimum porosity).

A sample was extracted from the obtained thin film to undergo ionic conductivity analysis.
A quantity of material of approximately 100 mg was introduced into a polyetherimide (PEI) cylinder of 8 mm in diameter, then pressed between two stainless steel plungers to a pressure of 150 MPa for the thin film sample or 450 MPa for the comparative powder sample. The pressure was maintained, and each piston connected to the terminals of a potentiostat. Ionic resistance measurements were performed by electrochemical impedance spectroscopy (EIS) at OCV, applying excitation amplitude of 50 mV in a frequency range between 7 MHz and 1 Hz with 15 points per decade with an MTZ impedance analyzer (BioLogic). At the end of the measurement, the pressure was reduced to 0 with both pistons removed. Inside the PEI cylinder, the powder had taken the form of a dense pellet the thickness of which was measured. The thickness of the film was also measured. Using the resistance, thickness and surface area of the material, the ionic conductivity of the materials was then calculated. It was found that the film according to the invention had an ionic conductivity of 1.1 mS.cm⁻¹.

## Claims

1. A composite material comprising a polycrystalline solid electrolyte material of the formula
M_{3-z}(Me^{k+})_{f}X_{3-z+k*f} (I)
wherein -3≤z<3, 2≤k<6, 0<f≤1;
- M is chosen from at least one alkali metal element, in particular M is chosen from Li and any of its combination with another alkali metal element;
- Me comprises a divalent, trivalent, tetravalent, pentavalent or hexavalent metal element or any combination thereof, and
- X is chosen from at least one halogen, in particular X is chosen from Cl, Br, I and any combination thereof; and
mineral fibers,
the composite material having at least one of its dimensions that is lower or equal to 150 µm, and having at least another dimension that is greater than or equal to 1 mm.

2. The material according to the preceding claim, wherein the mineral fibers are chosen from silica fibers, glass fibers, quartz fibers, carbon fibers, basalt fibers, and mixtures thereof, in particular the mineral fibers are chosen from quartz fibers, glass fibers and mixtures thereof and preferably the mineral fibers are quartz fibers.

3. The material according to any of the preceding claims, comprising from 0.1 % to 30 % by weight, in particular from 0.5 % to 20 % by weight and preferably from 1% to 10 % by weight, compared to the total weight of the composite, of mineral fibers.

4. The material according to any of the preceding claims, wherein Me is chosen from:
- alkaline earth metals, including Ba, Mg, Ca, Sr,
- rare earth elements such as Ce, Y, Gd, Er, La, Yb, Sc and their combinations,
- a 3d transition metal such as Zn, Cu, V, and
- an element chosen from Zr, Hf, Ti, Sn, Th, Ge, Ta, Nb, Mo, W, Sb, Te, In, Bi, Al, Ga, B, and
- any combination thereof.

5. The material according to any of the preceding claims, wherein the at least one dimension is lower or equal to 100 µm, in particular is lower or equal to 50 µm and preferably lower or equal to 20 µm.

6. The material according to any of the preceding claims, wherein the at least another dimension is greater than or equal to 1 cm and preferably greater than or equal to 10 cm.

7. The material according to any of the preceding claims, wherein the polycrystalline solid electrolyte material is chosen from Li₃YCl₆, Li₃YBr₆, Li_{2.7}Y_{0.7}Zr_{0.3}Cl₆, Li_{2.8}Y_{0.8}Sn_{0.2}Cl₆, Li_{3.2}Y_{0.8}Zn_{0.2}Cl₆, Li_{3.2}Y_{0.8}Mg_{0.2}Cl₆, Li₃Y_{1/3}Zr_{1/3}Mg_{1/3}Cl₆, Li₃Y_{1/3}Sn_{1/3}Mg_{1/3}Cl₆, Li₃Y_{1/3}Zr_{1/3}Zn_{1/3}Cl₆, Li_{2.95}Na_{0.05}YBr₆, Li_{2.95}K_{0.05}YBr₆, Li_{2.95}Cs_{0.05}YBr₆, Li₃Y_{0.7}Gd_{0.3}Br₆, Li₃Y_{0.8}Yb_{0.2}Br₆, Li₃Y_{0.9}La_{0.1}Br₆, Li₃Y_{0.9}Ce_{0.1}Br₆, Li₃In_{0.5}Y_{0.5}Cl₆, Li₃Y₁₋ₓInₓ(Cl,Br)₆ such as Li₃Y_{0.985}In_{0.015}Cl₄Br₂, or Li₃Y(Cl,Br)₆ such as Li₃YCl₄Br₂ or Li₃YCl₅Br.

8. An electrolyte tape comprising a composite material according to any of the preceding claims.

9. The electrolyte tape according to the preceding claim, wherein the tape is constituted of the composite material as defined any of claims 1 to 7 said composite material being constituted of the polycrystalline solid electrolyte material and the mineral fibers.

10. A preparation process of a composite material or an electrolyte tape according to any of the preceding claims, comprising the following steps:
- disposing a compound of formula (I) as defined in the previous claims or an ammonium complex thereof on a substantially planar surface,
- obtaining a pre-composite by disposing mineral fibers as defined in the previous claims on the compound of formula (I) or an ammonium complex thereof,
- heating the pre-composite at a temperature ranging from 290 °C to 600 °C, in particular from 300 °C to 590 °C and preferably from 320 °C to 550 °C, and
- concomitantly or sequentially to the heating step, applying to the pre-composite a pressure that is orthogonal to the substantially planar surface, said pressure ranging from 1.5 MPa to 30 MPa.

11. The preparation process according to the preceding claim, further including the preliminary steps of:
- providing compounds of formulae M₂CO₃ and Me₂O₃ in a solution of HX and NH₄X, wherein M, Me and X are as defined in the previous claims,
- drying the solution to obtain an ammonium complex of a compound of formula (I),
- disposing the said ammonium complex on a substantially planar surface, and
- initiating a heating step as defined in the previous claim to form the compound of formula (I).

12. The preparation process according to the preceding claim, wherein the substantially planar surface is made of a material selected from the group comprising carbon-containing material such as graphite, preferably with pyrolytic coating, graphene, glassy carbon; quartz; sapphire; silicon and garnet compounds, in particular the substantially planar surface is made of graphene.

13. The preparation process according to any of claims 10 to 12, wherein heating the pre-composite is selectively performed with laser heating, infrared heating, resistive heating, microwave heating or inductive heating.
